# EUROPEAN PATENT SPECIFICATION

(11) **EP 3 534 439 B1**
(45) Date of publication and mention of the grant of the patent: **07.07.2021**
(21) Application number: 18197086.4
(22) Date of filing: 27.09.2018
(51) Int. Cl.: H01M 4/1391, H01M 4/36, H01M 4/58, H01M 4/583, H01M 10/052, H01M 4/62, H01M 4/02

(54) **ELECTRODE MATERIAL FOR LITHIUM ION SECONDARY BATTERY, ELECTRODE FOR LITHIUM ION SECONDARY BATTERY, AND LITHIUM ION SECONDARY BATTERY**
ELEKTRODENMATERIAL FÜR LITHIUM-IONEN-SEKUNDÄRBATTERIE, ELEKTRODE FÜR LITHIUM-IONEN-SEKUNDÄRBATTERIE UND LITHIUM-IONEN-SEKUNDÄRBATTERIE
MATÉRIAU D'ÉLECTRODE POUR BATTERIE SECONDAIRE LITHIUM-ION, ÉLECTRODE POUR BATTERIE SECONDAIRE LITHIUM-ION ET BATTERIE SECONDAIRE LITHIUM-ION

(30) Priority: 28.02.2018 JP 2018035176
(43) Date of publication of application: 04.09.2019
(73) Proprietor: Sumitomo Osaka Cement Co., Ltd., Tokyo 102-8465 (JP)
(72) Inventor: NOZOE, Tsutomu, Tokyo, 1028465 (JP); YAMAYA, Ryuuta, Tokyo, 1028465 (JP)
(74) Representative: Müller-Boré & Partner Patentanwälte PartG mbB

(56) References cited:
- EP-A1- 2 894 703
- EP-A1- 2 919 303
- EP-A1- 3 151 312
- US-A1- 2012 301 780
- US-A1- 2013 052 535

## Description

The present invention relates to an electrode material for a lithium ion secondary battery, an electrode for a lithium ion secondary battery, and a lithium ion secondary battery.

Lithium ion secondary batteries have a higher energy density and a higher power density than lead batteries and nickel-hydrogen batteries and are used in a variety of applications such as small-size electronic devices such as smartphones, domestic backup power supply, and electric tools. In addition, attempts are underway to put high-capacity lithium ion secondary batteries into practical use for recyclable energy storage such as photovoltaic power generation and wind power generation.

Lithium ion secondary batteries include a cathode, an anode, an electrolyte, and a separator. As electrode materials that constitute the cathode, lithium-containing metal oxides having properties capable of reversibly intercalating and deintercalating lithium ions such as lithium cobalt oxide (LiCoO₂), lithium manganese oxide (LiMn₂O₄), and lithium iron phosphate (LiFePO₄) are used, and studies are underway in order for improvement from a variety of viewpoints of an increase in the capacity of batteries, the extension of service lives, improvement of safety, cost reduction, and the like.

For example, Patent Document 1 discloses an electrode material made of lithium iron phosphate particles having a surface coated with a carbonaceous film.

Carbon in lithium iron phosphate granules is classified into carbon that coats a surface of a primary particle as a carbon coat and carbon that is present as isolated carbon between primary particles. The carbon in lithium ion phosphate granules improves electron conductivity but has a problem of inhibiting the diffusion of lithium.

[Patent Document 1] JP-A-2013-157260

US 2012/301780 A1 describes a positive electrode active material for a lithium ion battery, comprising: a material being represented by chemical formula LiMPO₄ where M includes at least one of iron, manganese, cobalt, and nickel; wherein particles of the positive electrode active material have a diameter d in the range of 10 nm to 200 nm, the diameter d being determined by observation under a transmission electron microscope; wherein a ratio d/D of the diameter d to a crystallite diameter D is in the range of 1 to 1.35, the crystallite diameter D being determined from a half width measured by X-ray diffraction; and wherein the positive electrode active material is coated with carbon, an amount of the carbon being in the range of 1 weight percent to 10 weight percent.

EP 2 894 703 A1 describes a nonaqueous electrolyte secondary battery comprising an electrode assembly having a positive electrode and a negative electrode, and a nonaqueous electrolyte, wherein the positive electrode has a positive electrode current collector and a positive electrode active material layer that is formed on the positive electrode current collector and includes at least a positive electrode active material and a conductive material, the positive electrode active material includes at least a lithium-transition metal composite oxide, the conductive material includes a lithium phosphate compound coated, on at least part of the surface thereof, with conductive carbon, and a proportion of the conductive material in the positive electrode active material layer is 10% by mass or less when an overall amount of the positive electrode active material layer is 100% by mass.

US 2013/052535 A1 describes a lithium ion secondary battery comprising: a positive electrode; a negative electrode; and an electrolytic solution, at least one of the positive electrode and the negative electrode being capable of storing and releasing lithium ions, and containing an active material that satisfies the following conditions (A) to (D) : (A) the active material being a Li complex oxide or a Li complex oxoacid salt that contains lithium, oxygen, and at least one of the elements of Groups 2 to 15 of the long-form periodic table; (B) the active material containing a plurality of primary particles having a particle size distribution (median diameter: nm) with 1 nm<D10<65 nm, 5 nm<D50<75 nm, and 50 nm<D90<100 nm; (C) the active material having a plurality of pores between the plurality of primary particles, wherein the maximum peak pore size A (nm) in a pore size distribution as measured by a mercury intrusion technique is 10 nm≤A≤75 nm; and (D) the ratio B/A of the maximum peak pore size A (nm) and the crystallite size B (nm) determined from the half width of the X-ray diffraction pattern of the active material as measured by X-ray diffractometry is 0.5<B/A≤1.

EP 2 919 303 A1 describes an electrode material comprising: a layer having Li ion conductive substance including Li, at least any one of Fe and Mn, P and O, and conductive carbon C on a surface of primary particles of an electrode active material represented by general formula LiMPO₄ (wherein, M= [FeₜMn₁₋ₜ], and t is a number between 0 inclusive and 1 inclusive); minute secondary particles formed from a plurality of the primary particles that aggregate, and bind to each other via the layer having Li ion conductive substance and conductive carbon C; wherein an area-equivalent diameter determined by the following equation (1) with a specific surface area obtained from the nitrogen adsorption Brunauer, Emmett, Teller (BET) multipoint method is 45 nm or more. Equation (1): (Area-equivalent diameter) = 6 /{(true density of electrode active material) × (specific surface area)}.

EP 3 151 312 A1 describes an electrode material for a lithium-ion rechargeable battery formed by coating a surface of an electrode active material represented by General Formula LiFeₓMn_{1-x-y}M_{y}PO₄ (here, M represents at least one element selected from Mg, Ca, Co, Sr, Ba, Ti, Zn, B, Al, Ga, In, Si, Ge, and rare earth elements, 0.05≤x≤1.0, 0≤y≤0.14) with a carbonaceous film, wherein an angle of repose is in a range of 35° or more and 50° or less.

In the case of evaluating a specific surface area obtained using a BET method regarding granules in which an amount of carbon isolated is great, the specific surface area increases due to the porosity of carbon and a particle diameter computed from the specific surface area is miniaturized. In addition, in granules in which a number of cracks are present in the carbon coat as well, similarly, the specific surface area increases. Granules having a large specific surface area as described above have a low electron conductivity.

In Patent Document 1, a thickness of the carbon coat and a total amount of carbon are specified, but a state of the carbon coat or the amount of carbon isolated is not sufficiently studied.

The present invention has been made in consideration of the above-described circumstances, and an object of the present invention is to provide an electrode material for a lithium ion secondary battery satisfying both electron conductivity and lithium diffusivity, an electrode in which the electrode material for a lithium ion secondary battery is used, and a lithium ion secondary battery in which the electrode is used.

As a result of intensive studies for solving the above-described problem, the present inventors found that the problem can be solved by inventions described below.
[1] An electrode material for a lithium ion secondary battery including a carbonaceous coated electrode active material having primary particles of an electrode active material, secondary particles that are aggregates of the primary particles, and a carbonaceous film that coats the primary particles of the electrode active material and the secondary particles that are the aggregates of the primary particles, in which a ratio A/B of an average primary particle diameter A (nm) that is estimated from a specific surface area of the carbonaceous coated electrode active material obtained by a BET method to a crystallite diameter B (nm) of the electrode active material is 1 or more and 2.5 or less, in which the average primary particle diameter A is 30 nm or more and 380 nm or less, in which the crystallite diameter B is 30 nm or more and 150 nm or less, in which an average particle diameter of the secondary particles of the carbonaceous coated electrode active material is 0.5 µm or more and 60 µm or less, in which the specific surface area of the carbonaceous coated electrode active material obtained by the BET method is 6 m²/g or more and 25 m²/g or less, and in which a content of carbon in the carbonaceous coated electrode active material is 0.5% by mass or more and 2.5% by mass or less, a coating ratio of the carbonaceous film is 80% or more, and a film thickness of the carbonaceous film is 0.8 nm or more and 5.0 nm or less.
[2] The electrode material for a lithium ion secondary battery according to [1], in which the electrode active material is represented by General Formula LiₓA_{y}D_{z}PO₄ (here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, 0.9<x<1.1, 0<y≤1.0, 0≤z<1.0, and 0.9<y+z<1.1).
[3] The electrode material for a lithium ion secondary battery according to [1] or [2], in which an oil absorption amount of the carbonaceous coated electrode active material using N-methyl-2-pyrrolidone (NMP) is 50 ml/100 g or less.
[4] An electrode for a lithium ion secondary battery formed using the electrode material according to any one of [1] to [3].
[5] A lithium ion secondary battery using the electrode according to [4].

According to the present invention, it is possible to provide an electrode material for a lithium ion secondary battery satisfying both electron conductivity and lithium diffusivity, an electrode in which the electrode material for a lithium ion secondary battery is used, and a lithium ion secondary battery in which the electrode is used.

### [Electrode material for lithium ion secondary battery]

The electrode material for a lithium ion secondary battery of the present invention (hereinafter, also simply referred to as the electrode material) includes a carbonaceous coated electrode active material having primary particles of an electrode active material, secondary particles that are aggregates of the primary particles, and a carbonaceous film that coats the primary particles of the electrode active material and the secondary particles that are the aggregates of the primary particles. In the electrode material, a ratio A/B of an average primary particle diameter A (nm) that is estimated from a specific surface area of the carbonaceous coated electrode active material obtained by a BET method to a crystallite diameter B (nm) of the electrode active material is 1 or more and 2.5 or less.

The present inventors found that, as an improvement of a state of the carbonaceous film that coats the electrode active material, the specific surface area of the carbonaceous coated electrode active material can be decreased by suppressing the generation of fine nanocracks and reducing an amount of carbon isolated from the carbonaceous coated electrode active material. A carbonaceous coated electrode active material having a decreased specific surface area is formed of particles mainly including single crystals, and thus the average primary particle diameter A (nm) that is estimated from the specific surface area of the carbonaceous coated electrode active material becomes a value close to the crystallite diameter B (nm) of the electrode active material. Therefore, it is possible to produce an electrode material for a lithium ion secondary battery satisfying both electron conductivity and lithium diffusivity.

The electrode active material that is used in the present invention is constituted of primary particles and secondary particles that are aggregates of the primary particles. A shape of the electrode active material is not particularly limited, but is preferably spherical, particularly, truly spherical. When the electrode active material has a spherical shape, an inside of a granulated granular body becomes denser, and thus a density of an electrode easily improves. In addition, the electrode active material has a granular body form, and thus it is possible to decrease an amount of a solvent in preparation of a paste for forming an electrode using the electrode material of the present invention, and application of the paste for forming an electrode to a current collector becomes easy. Meanwhile, the paste for forming an electrode can be prepared by, for example, mixing the electrode material of the present invention, a binder resin (a binding agent), and a solvent.

The electrode active material that is used in the electrode material of the present invention is preferably made of a transition metal lithium phosphate compound having an olivine structure. The transition metal lithium phosphate compound having an olivine structure is preferably an electrode active material represented by General Formula LiₓA_{y}D_{z}PO₄ (here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, 0.9<x<1.1, 0<y≤1.0, 0≤z<1.0, and 0.9<y+z<1.1) from the viewpoint of a high discharge capacity and a high energy density.

Here, A is at least one element selected from the group consisting of Co, Mn, Ni, Fe, Cu, and Cr, and, among these, Mn and Fe are preferred, and Fe is more preferred.

D is at least one element selected from the group consisting of Mg, Ca, Sr, Ba, Ti, Zn, B, Al, Ga, In, Si, Ge, Sc, and Y, and, among these, Mg, Ca, Sr, Ba, Ti, Zn, and Al are preferred. In a case in which the electrode active material includes these elements, it is possible to produce a cathode mixture layer capable of realizing a high discharge potential and high safety. In addition, these elements have an abundant amount of resources and are thus preferred as a material to be selected.

The carbonaceous film that coats the primary particles of the electrode active material and the secondary particles that are aggregates of the primary particles is pyrolytic carbon obtained by carbonizing an organic substance that serves as a raw material of the carbonaceous film. The organic substance is not particularly limited as long as the organic substance is capable of forming the carbonaceous film on a surface of the electrode active material, and examples thereof include polyvinyl alcohol (PVA), polyvinyl pyrrolidone, cellulose, starch, gelatin, carboxymethyl cellulose, methyl cellulose, hydroxymethyl cellulose, hydroxyethyl cellulose, polyacrylic acid, polystyrene sulfonate, polyacrylamide, polyvinyl acetate, glucose, fructose, galactose, mannose, maltose, sucrose, lactose, glycogen, pectin, alginic acid, glucomannan, chitin, hyaluronic acid, chondroitin, agarose, polyethers, divalent alcohols, trivalent alcohols, and the like. These organic substances may be used singly or two or more organic substances may be used in mixture.

The ratio A/B of the average primary particle diameter A (nm) that is estimated from the specific surface area of the carbonaceous coated electrode active material obtained by the BET method (BET specific surface area) to the crystallite diameter B (nm) of the electrode active material is 1 or more and 2.5 or less. When the ratio A/B is less than 1, the BET specific surface area of the carbonaceous coated electrode active material becomes too large, and there is a concern of causing degradation of the electron conductivity. When the BET specific surface area exceeds 2.5, it is considered that sintering of the primary particles occurs, and there is a concern that the breakage of the carbonaceous film caused by the sintering may decrease the ion diffusivity or the electron conductivity of the carbonaceous coated electrode active material. From the above-described viewpoint, the ratio A/B is preferably 1.1 or more and 2.0 or less, more preferably 1.2 or more and 2.0 or less, and still more preferably 1.2 or more and 1.8 or less.

The average primary particle diameter A can be computed from Expression (1) in a case in which the particles are assumed to have a spherical shape.

Average primary particle diameter A (nm)=6/[(true specific gravity (g/m³) of carbonaceous coated electrode active material)×(BET specific surface area (m²/g) of carbonaceous coated electrode active material)×10⁹] (1)

Here, the true specific gravity refers to a density calculated from a density occupied by a substance itself.

In addition, the crystallite diameter B can be calculated from the Scherrer equation using a full width at half maximum of a diffraction peak of a (020) plane in a powder X-ray diffraction pattern that is measured and obtained using an X-ray diffractormeter (for example, RINT2000, manufactured by Rigaku Corporation) and a diffraction angle (2θ).

The average primary particle diameter A is 30 nm or more and 380 nm or less, preferably 50 nm or more and 300 nm or less, and more preferably 50 nm or more and 250 nm or less. When the average primary particle diameter A is in the above-described range, it is possible to set the ratio A/B in the above-described range. In addition, as the average primary particle diameter A is 30 nm or more, it is possible to suppress an increase in the amount of carbon caused by the specific surface area becoming too large, and, as the average primary particle diameter is 380 nm or less, it is possible to improve the electron conductivity and the ion diffusivity due to a degree of the specific surface area.

The crystallite diameter B of the electrode active material is 30 nm or more and 150 nm or less, preferably 50 nm or more and 120 nm or less, and more preferably 50 nm or more and 100 nm or less. When the crystallite diameter B is in the above-described range, it is possible to set the ratio A/B in the above-described range. In addition, as the crystallite diameter B is 30 nm or more, an amount of carbon necessary to sufficiently coat a surface of the electrode active material with the carbonaceous film does not become too large, and it is possible to suppress an amount of the binding agent. Therefore, it is possible to increase an amount of an active material in the electrode and to increase a capacity of a battery. In addition, a sufficient binding force can be obtained, and it is possible to prevent the easy occurrence of film peeling. Meanwhile, as the crystallite diameter is 150 nm or less, an internal resistance of the electrode active material is suppressed, and it is possible to increase the discharge capacity at a high charge-discharge rate in the case of forming a battery.

In addition, an average particle diameter of the primary particles of the electrode active material is preferably 10 nm or more and 500 nm or less, more preferably 20 nm or more and 400 nm or less, still more preferably 20 nm or more and 300 nm or less, and far still more preferably 30 nm or more and 200 nm or less. When the average particle diameter of the primary particles of the electrode active material is 10 nm or more, it is possible to suppress an increase in a mass of carbon that becomes necessary due to an increase in the specific surface area of the primary particles of the electrode active material and suppress a decrease in a charge and discharge capacity per unit mass of the electrode material. In addition, it becomes easy to uniformly coat surfaces of the primary particles of the electrode active material with the carbonaceous film. As a result, a lithium ion secondary battery in which the electrode material for a lithium ion secondary battery of the present invention is used has a discharge capacity that becomes great in high-speed charge and discharge and is capable of realizing sufficient charge and discharge performance. Meanwhile, when the average particle diameter of the primary particles of the electrode active material is 500 nm or less, it is possible to suppress an increase in lithium ion diffusion resistance or migration resistance of electrons in the primary particles of the electrode active material. As a result, the lithium ion secondary battery in which the electrode material for a lithium ion secondary battery of the present invention is capable of increasing the discharge capacity in high-speed charge and discharge.

Here, the average particle diameter of the primary particles refers to a number-average particle diameter. The average particle diameter of the primary particles of the electrode active material of the present invention can be obtained by randomly selecting 100 primary particles, measuring a long diameter and a short diameter of each of the primary particles using a scanning electron microscope (SEM), and obtaining an average value thereof.

The average particle diameter of the secondary particles formed of the carbonaceous coated electrode active material is 0.5 µm or more and 60 µm or less, preferably 1 µm or more and 20 µm or less, and more preferably 1 µm or more and 10 µm or less. As the average particle diameter of the secondary particles is 0.5 µm or more, it is possible to suppress an amount of a conductive auxiliary agent and the binding agent blended to prepare an electrode material paste for a lithium ion secondary battery by mixing the electrode material, the conductive auxiliary agent, the binder resin (the binding agent), and a solvent and increase a battery capacity of the lithium ion secondary battery per unit mass of a cathode mixture layer for a lithium ion secondary battery. Meanwhile, as the average particle diameter of the secondary particles is 60 µm or less, it is possible to enhance the dispersibility and uniformity of the conductive auxiliary agent or the binding agent in the cathode mixture layer. As a result, the lithium ion secondary battery in which the electrode material for a lithium ion secondary battery of the present invention is used is capable of increasing the discharge capacities in high-speed charge and discharge.

Here, the average particle diameter of the secondary particles refers to a volume-average particle diameter. The average particle diameter of the secondary particles can be measured using a laser diffraction and scattering particle size distribution measurement instrument or the like.

The specific surface area of the carbonaceous coated electrode active material obtained by the BET method is 6 m²/g or more and 25 m²/g or less, preferably 10 m²/g or more and 20 m²/g or less, and more preferably 12 m²/g or more and 18 m²/g or less. When the specific surface area is in the above-described range, it is possible to set the ratio A/B in the above-described range. In addition, as the specific surface area is 6 m²/g or more, it is possible to increase a diffusion rate of a lithium ion in the electrode material, and it is possible to improve battery characteristics of the lithium ion secondary battery. Meanwhile, as the specific surface area is 25 m²/g or less, it is possible to increase the electron conductivity.

Meanwhile, the specific surface areas can be measured using a specific surface area meter (for example, manufactured by MicrotracBEL Corp., trade name: BELSORP-mini,) and the BET method.

When an amount of carbon isolated in the carbonaceous coated electrode active material becomes large, the specific surface area of the carbonaceous coated electrode active material increases. In addition, when a number of cracks are present in the carbonaceous film that coats the electrode active material, the specific surface area of the carbonaceous coated electrode active material increases. Therefore, the amount of carbon isolated in the carbonaceous coated electrode active material is preferably decreased, and the generation of cracks in the carbonaceous film is preferably suppressed.

The amount of carbon isolated in the carbonaceous coated electrode active material is 0.5% by mass or more and 2.5% by mass or less, preferably 0.8% by mass or more and 1.3% by mass or less, and more preferably 0.8% by mass or more and 1.2% by mass or less. When the content of carbon is in the above-described range, it is possible to set the A/B ratio in the above-described range. In addition, as the content of carbon is 0.5% by mass or more, it is possible to sufficiently enhance the electron conductivity, and, as the content of carbon is 2.5% by mass or less, it is possible to increase the electrode density.

Meanwhile, the content of carbon can be measured using a carbon analyzer (for example, manufactured by Horiba Ltd., carbon/sulfur combustion analyzer EMIA-810W).

A thickness (average value) of the carbonaceous film that coats the electrode active material is 0.8 nm or more and 5.0 nm or less and preferably 1.0 nm or more and 4.0 nm or less. As the thickness of the carbonaceous film is 0.8 nm or more, it is possible to suppress the formation of a film having a desired resistance value becoming impossible due to an excessively small thickness of the carbonaceous film. In addition, it is possible to ensure a conductive property as the electrode material. Meanwhile, as the thickness of the carbonaceous film is 5.0 nm or less, it is possible to suppress a decrease in the battery capacity of the electrode material per unit mass.

In addition, when the thickness of the carbonaceous film is in the above-described range, it becomes easy to closely pack the electrode material, and thus an amount of the electrode material for a lithium ion secondary battery packed per unit volume increases. As a result, it is possible to increase the electrode density, and a high-capacity lithium ion secondary battery can be obtained.

A coating ratio of the carbonaceous film to the electrode active material is 60% or more and preferably 80% or more. As the coating ratio of the carbonaceous film is 60% or more, a coating effect of the carbonaceous film can be sufficiently obtained.

Meanwhile, the coating ratio of the carbonaceous film can be measured using a transmission electron microscope (TEM), an energy dispersive X-ray microanalyzer (EDX), or the like.

A density of the carbonaceous film, which is computed using a carbon component constituting the pyrolytic carbonaceous film, is preferably 0.3 g/cm³ or more and 1.5 g/cm³ or less and more preferably 0.4 g/cm³ or more and 1.0 g/cm³ or less. The density of the carbonaceous film, which is computed using the carbon component constituting the pyrolytic carbonaceous film, refers to a mass of the carbonaceous film per unit volume in a case in which the carbonaceous film is assumed to be constituted of carbon alone.

When the density of the carbonaceous film is 0.3 g/cm³ or more, the carbonaceous film exhibits a sufficient electron conductivity. Meanwhile, when the density of the carbonaceous film is 1.5 g/cm³ or less, a content of fine crystals of graphite made of a lamellar structure in the carbonaceous film is small, and thus a steric barrier caused by the fine crystals of graphite is not generated during the diffusion of Li ions in the carbonaceous film. Therefore, there are no cases in which the inner resistance increases. As a result, there are no cases in which an internal resistance of the lithium ion secondary battery increases, and voltage drop does not occur at a high charge-discharge rate of the lithium ion secondary battery.

An oil absorption amount of the carbonaceous coated electrode active material using N-methyl-2-pyrrolidone (NMP) (NMP oil absorption amount) is preferably 50 ml/100 g or less, more preferably 48 ml/100 g or less, and still more preferably 45 ml/100 g or less. When the NMP oil absorption amount is 50 ml/100 g or less, it is possible to suppress an increase in a viscosity of an electrode paste, and the diffusion of the conductive auxiliary agent or the binding agent becomes easy. Meanwhile, a lower limit value of the oil absorption amount for which NMP is used is not particularly limited, but is, for example, 20 ml/100 g.

Meanwhile, the NMP oil absorption amount can be measured according to a method described in JIS K5101-13-1 (refined linseed oil method) using linseed oil instead of NMP.

A resistivity of a green compact of the electrode material of the present invention which is molded at a pressure of 50 MPa is preferably 1 MΩ·cm or less, more preferably 3 kQ·cm or less, still more preferably 1,000 Ω·cm or less, and far still more preferably 500 Ω·cm or less. When the resistivity of the green compact is 1 MΩ·cm or less, in the case of forming a battery, it is possible to increase the discharge capacity at a high charge-discharge rate.

Meanwhile, the resistivity of the green compact can be measured using a method described in the Examples.

### (Method for manufacturing electrode material for lithium ion secondary battery)

A method for manufacturing the electrode material for lithium ion secondary battery of the present invention has, for example, a manufacturing step of an electrode active material and an electrode active material precursor, a granulation step of obtaining a granulated substance by drying and granulating a mixture slurry including at least one electrode active material raw material selected from the group consisting of the electrode active material and the electrode active material precursor and an organic substance that serves as a carbon source using a spray dryer, and a thermal treatment step of thermally treating the granulated substance obtained in the above-described step in a non-oxidative atmosphere at 600°C or higher and 1,000°C or lower.

### (Manufacturing step of electrode active material and electrode active material precursor)

The manufacturing step of an electrode active material and an electrode active material precursor (hereinafter, the electrode active material and the electrode active material precursor will be referred to as the electrode active material raw material in some cases) is not particularly limited, and, for example, in a case in which the electrode active material raw material is represented by General Formula LiₓA_{y}D_{z}PO₄, methods of the related art such as a solid phase method, a liquid phase method, and a gas phase method can be used. Examples of LiₓA_{y}D_{z}PO₄ obtained using the above-described method include a particle-like electrode active material raw material (hereinafter, referred to as LiₓA_{y}M_{z}PO₄ particles" in some cases).

LiₓA_{y}D_{z}PO₄ particles can be obtained by, for example, hydrothermally synthesizing a slurry-form mixture obtained by mixing a Li source, an A source, a P source, water, and, as necessary, a D source. According to the hydrothermal synthesis, LiₓA_{y}D_{z}PO₄ is generated as a sediment in water. The obtained sediment may be a precursor of LiₓA_{y}D_{z}PO₄. In this case, the target LiₓA_{y}D_{z}PO₄ particles can be obtained by calcinating the precursor of LiₓA_{y}D_{z}PO₄.

A pressure-resistant airtight container is preferably used in the hydrothermal synthesis.

Here, examples of the Li source include lithium salts such as lithium acetate (LiCH₃COO) and lithium chloride (LiCl), lithium hydroxide (LiOH), and the like. Among these, as the Li source, at least one selected from the group consisting of lithium acetate, lithium chloride, and lithium hydroxide is preferably used.

Examples of the A source include chlorides, carboxylates, hydrosulfates, and the like which include at least one selected from the group consisting of Co, Mn, Ni, Fe, Cu, and Cr. For example, in a case in which the A in LiₓA_{y}D_{z}PO₄ is Fe, examples of the Fe source include divalent iron salts such as iron (II) chloride (FeCl₂), iron (II) acetate (Fe(CH₃COO)₂), and iron (II) sulfate (FeSO₄). Among these, as the Fe source, at least one selected from the group consisting of iron (II) chloride, iron (II) acetate, and iron (II) sulfate is preferably used.

Examples of the D source include chlorides, carboxylates, hydrosulfates, and the like which include at least one selected from the group consisting of Mg, Ca, Sr, Ba, Ti, Zn, B, Al, Ga, In, Si, Ge, Sc, and Y.

Examples of the P source include phosphoric acid compounds such as phosphoric acid (H₃PO₄), ammonium dihydrogen phosphate (NH₄H₂PO₄), and diammonium phosphate ((NH₄) **₂HPO₄)**. **Among** these, as the P source, at least one selected from the group consisting of phosphoric acid, ammonium dihydrogen phosphate, and diammonium phosphate is preferably used.

### (Granulation step)

The present step is a step of obtaining a granulated substance by drying and granulating a mixture slurry including the electrode active material raw material and an organic substance that serves as a carbon source using a spray dryer.

As the electrode active material and the organic substance, electrode active materials and organic substances respectively described above can be used.

In addition, a highly water-absorbing polymer is preferably added to the mixture slurry including the electrode active material raw material and the organic substance. In such a case, it is possible to prevent the easy occurrence of the particle growth and sintering of the electrode active material in the thermal treatment step described below. Here, the highly water-absorbing polymer in the present specification refers to a polymer material having a property of absorbing water that weighs at least several times to several tens of times a weight of the polymer material and swells when left to stand at 35°C and a relative humidity of 100% for 48 hours.

In the present invention, from the viewpoint of suppressing the particle growth and calcination of the electrode active material, the highly water-absorbing polymer is preferably a polymer that absorbs water that weighs ten or more times the weight of the polymer and more preferably a polymer that absorbs water that weighs 100 or more times the weight of the polymer.

The highly water-absorbing polymer is not particularly limited, and examples thereof include polyacrylate-based polymers, polyalginate-based polymers, polyvinyl alcohol-acrylate-based polymers, acrylate-acrylamide-based polymers, polyacetal carboxylate-based polymers, isobutylene-maleic anhydride copolymers, polyvinyl alcohol-based polymers, carboxylmethyl cellulose-based polymers, polyacrylonitrile-based crosslinked bodies, and the like. These highly water-absorbing polymers may be used singly, or two or more highly water-absorbing polymers may be jointly used.

The blending ratio between the organic substance and the electrode active material raw material is preferably 0.5 parts by mass or more and 2.5 parts by mass or less in terms of a weight of carbon obtained from the organic substance with respect to 100 parts by mass of an active material that is obtained from the electrode active material raw material. An actual blending amount varies depending on a carbonization amount (the kind of the carbon source or carbonization conditions) by heating carbonization and is approximately 0.7 parts by weight to 6 parts by weight. When the amount of the organic substance blended is set in the above-described range, it is possible to set the ratio A/B in the above-described range.

In addition, the blending ratio [highly water-absorbing polymer/electrode active material raw material] of the highly water-absorbing polymer to the electrode active material raw material is preferably 0.1/100 to 10/100 and more preferably 0.2/100 to 5/100. When the blending ratio is set in the above-described range, it is possible to set the crystallite diameter of the electrode active material in the above-described range.

The organic substance, the electrode active material raw material, and, as necessary, the highly water-absorbing polymer are dissolved or dispersed in water, thereby preparing a mixture slurry. A method for dissolving or dispersing the organic substance, the electrode active material raw material, and the highly water-absorbing polymer in water is not particularly limited, and it is possible to use, for example, a dispersion device such as a planetary ball mill, an oscillation ball mill, a beads mill, a paint shaker, or an attritor.

In addition, when organic substance, the electrode active material raw material, and the highly water-absorbing polymer are dissolved or dispersed in water, it is preferable to disperse the electrode active material raw material in water, then, add the organic substance and the highly water-absorbing polymer thereto, and stir the components.

The obtained mixture slurry is dried and granulated using a spray dryer. The average particle diameter of the secondary particles of the carbonaceous coated electrode active material can be adjusted by appropriately adjusting a concentration of the slurry during the drying of the mixture slurry using the spray dryer.

The concentration of the mixture slurry is preferably 2 to 65% by mass and more preferably 10 to 50% by mass. When the concentration of the slurry is set in the above-described range, it is possible to set the average particle diameter of the secondary particles of the carbonaceous coated electrode active material in the above-described range. In addition, it is possible to set the ratio A/B in the above-described range.

In a case in which the granulated substance (mixture) obtained above includes the highly water-absorbing polymer, the granulated substance is preferably humidified. When the granulated substance is humidified, the highly water-absorbing polymer in the granulated substance swells, and thus particle gaps in the electrode active material raw material enlarge, and substance migration between the particles of the electrode active material raw material is suppressed. Therefore, in the thermal treatment step described below, the growth of the particles and sintering do not easily occur even when the electrode active material raw material is heated at a high temperature, and it is possible to set the crystallite diameter of the electrode active material in the above-described range.

The granulated substance is preferably humidified at a temperature of 25°C to 40°C and a relative humidity of 75% to 100% for 30 minutes to 48 hours and more preferably humidified at a temperature of 25°C to 35°C or and a relative humidity of 85% to 100% for one hour to 12 hours.

### (Thermal treatment step)

The present step is a step of thermally treating the granulated substance obtained in the granulation step in a non-oxidative atmosphere at 600°C or higher and 1,000°C or lower.

The non-oxidative atmosphere is preferably an inert atmosphere of nitrogen (N₂), argon (Ar), or the like, and, in a case in which oxidation needs to be further suppressed, a reducing atmosphere including approximately several percentages by volume of a reducing gas such as hydrogen (H₂) is preferred. In addition, for the purpose of removing an organic component evaporated in the non-oxidative atmosphere during the thermal treatment, a susceptible or burnable gas such as oxygen (O₂) may be introduced into the inert atmosphere.

The thermal treatment is carried out at a temperature in a range of 600°C or higher and 1,000°C or lower and preferably 700°C or higher and 900°C or lower for 1 to 24 hours and preferably 1 to 6 hours.

When a thermal treatment temperature is lower than 600°C, the carbonization of the organic substance becomes insufficient, and there is a concern that an increase in the electron conductivity may not be possible, and, when the thermal treatment temperature is higher than 1,000°C, there is a concern that the active material may be decomposed or the suppression of the growth of the particles may not be possible.

In addition, a temperature-increase rate is preferably 10°C/minute or more and more preferably 20°C/minute or more.

Here, when a calcination temperature is set to 600°C or higher, the decomposition and reaction of the organic substance included in the granulated substance are likely to sufficiently proceed, and the organic substance is likely to be sufficiently carbonized. As a result, it is easy to prevent the generation of a high-resistance decomposed substance of the organic substance among the obtained particles. Meanwhile, when the calcination temperature is set to 1,000°C or lower, lithium (Li) in the electrode active material raw material does not easily evaporate, and the grain growth of the electrode active material to a target size or larger is suppressed. As a result, in the case of producing a lithium ion secondary battery provided with a cathode including the electrode material of the present invention, it is possible to prevent a decrease in the discharge capacity at a high charge-discharge rate and to realize a lithium ion secondary battery having a sufficient charge and discharge rate performance.

### [Electrode for lithium ion secondary battery]

An electrode for a lithium ion secondary battery of the present invention (hereinafter, also referred to as the electrode) is formed using the above-described electrode material.

In order to produce the electrode of the present invention, the electrode material, a binding agent made of a binder resin, and a solvent are mixed together, thereby preparing a paint for forming the electrode or a paste for forming the electrode. At this time, a conductive auxiliary agent such as carbon black, acetylene black, graphite, ketjen black, natural graphite, or artificial graphite may be added thereto as necessary.

As the binding agent, that is, the binder resin, for example, a polytetrafluoroethylene (PTFE) resin, a polyvinylidene fluoride (PVdF) resin, fluorine rubber, or the like is preferably used.

A blending ratio between the electrode material and the binder resin is not particularly limited; however, for example, a content of the binder resin is set to 1 part by mass to 30 parts by mass and preferably set to 3 parts by mass to 20 parts by mass with respect to 100 parts by mass of the electrode material.

The solvent that is used for the paint for forming the electrode or the paste for forming the electrode may be appropriately selected in accordance with properties of the binder resin.

Examples thereof include water, alcohols such as methanol, ethanol, 1-propanol, 2-propanol (isopropyl alcohol: IPA), butanol, pentanol, hexanol, octanol, and diacetone alcohol, esters such as ethyl acetate, butyl acetate, ethyl lactate, propylene glycol monomethyl ether acetate, propylene glycol monoethyl ether acetate, and γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether, ketones such as acetone, methyl ethyl ketone (MEK), methyl isobutyl ketone (MIBK), acetylacetone, and cyclohexanone, amides such as dimethyl formamide, N,N-dimethylacetoacetamide, and N-methylpyrrolidone, glycols such as ethylene glycol, diethylene glycol, and propylene glycol, and the like. These solvents may be used singly, or two or more solvents may be used in mixture.

Next, the paint for forming the electrode or the paste for forming the electrode is applied onto one surface of a metallic foil and then dried, thereby obtaining a metallic foil having a coated film made of a mixture of the electrode material and the binder resin formed on one surface.

Next, the coated film is bonded by pressurization and dried, thereby producing a current collector (electrode) having an electrode material layer on one surface of the metallic foil.

An electrode capable of increasing a discharge capacity by decreasing a direct current resistance can be produced in the above-described manner.

### [Lithium ion secondary battery]

A lithium ion secondary battery of the present invention includes a cathode made of the above-described electrode.

When an electrode is produced using the above-described electrode material, the lithium ion secondary battery is capable of decreasing an internal resistance of the electrode. Therefore, it is possible to suppress the internal resistance of the battery at a low level, and consequently, there is no concern of a significant drop of a voltage, and it is possible to provide a lithium ion secondary battery capable of high-rate charging and discharging.

In the lithium ion secondary battery of the present invention, an anode, an electrolyte, a separator, and the like are not particularly limited. For example, as the anode, it is possible to use an anode material such as metallic Li, a carbon material, a Li alloy, or Li₄Ti₅O₁₂. In addition, instead of the electrolyte and the separator, a solid electrolyte may be used.

The lithium ion secondary battery of the present invention includes the cathode made of the electrode of the present invention and thus has a high discharge capacity.

Hereinafter, the present invention will be specifically described using examples and a comparative example. Meanwhile, the present invention is not limited to forms described in the Examples.

### <Manufacturing Example 1: manufacturing of electrode active material (LiFePO₄)>

LiFePO₄ was hydrothermally synthesized in the following manner.

LiOH as a Li source, NH₄H₂PO₄ as a P source, and FeSO₄·7H₂O as a Fe source (B source) were used, and these components were mixed into pure water so that a substance amount ratio (Li:Fe:P) reached 3:1:1, thereby preparing a homogeneous slurry-form mixture (200 ml).

Next, this mixture was put into a pressure-resistant airtight container having a capacity of 500 mL and was hydrothermally synthesized at 170°C for 12 hours. After this reaction, the mixture was cooled to room temperature (25°C), thereby obtaining a cake-form reaction product which was sedimented in the container. This sediment was sufficiently cleaned with distilled water a plurality of times, and a water content ratio was maintained at 30% so as to prevent the sediment from being dried, thereby producing a cake-form substance. As a result of measuring a powder obtained by sampling a small amount of this cake-form substance and drying the cake-form substance in a vacuum at 70°C for two hours by means of X-ray diffraction, it was confirmed that single-phase LiFePO₄ was formed.

### <Manufacturing Example 2: manufacturing of electrode active material (LiMnPO₄)>

LiMnPO₄ was synthesized in the same manner as in Manufacturing Example 1 except for the fact that MnSO₄·H₂O was used instead of FeSO₄·7H₂O as the A source.

### <Manufacturing Example 3: manufacturing of electrode active material (Li[Fe_{0.25}Mn_{0.75}]PO₄)>

Li [Fe_{0.25}Mn_{0.75}]PO₄ was synthesized in the same manner as in Manufacturing Example 1 except for the fact that a mixture of FeSO₄·7H₂O and MnSO₄·H₂O (at a substance amount ratio of 25:75) was used as the A source.

### <Example 1>

LiFePO₄ (electrode active material) (20 g) obtained in Manufacturing Example 1, polyvinyl alcohol (PVA) (0.73 g) as a carbon source, and sodium polyacrylate (0.05 g) as a highly water-absorbing polymer were mixed into water so that a total amount reached 100 g and were crushed and mixed using a ball mill together with zirconia balls (150 g) having 5 mmφ, thereby obtaining a slurry (mixture).

Next, the obtained slurry was dried and granulated using a spray dryer. After that, the obtained granulated substance was placed still in a high-humidity environment (30°C, a relative humidity of 100%RH) for one hour, sodium polyacrylate (the highly water-absorbing polymer) was swollen and was then heated in a nitrogen (N₂) atmosphere at a temperature-increase rate of 20°C/minute, and a thermal treatment was carried out at a temperature of 770°C for four hours, thereby obtaining an electrode material including a carbonaceous coated electrode active material.

### <Example 2>

An electrode material including a carbonaceous coated electrode active material was obtained in the same manner as in Example 1 except for the fact that sodium polyalginate was used instead of sodium polyacrylate as the highly water-absorbing polymer.

### <Example 3>

A granulated substance was obtained in the same manner as in Example 1. The granulated substance was uniformly spread in a 100 cm² rectangular container, and then water corresponding to 1% of a weight of the granulated substance was sprayed to the granulated substance, thereby swelling the highly water-absorbing polymer. Next, the highly water-absorbing polymer was heated in a nitrogen (N₂) atmosphere at a temperature-increase rate of 20°C/minute, and a thermal treatment was carried out at a temperature of 770°C for four hours, thereby obtaining an electrode material including a carbonaceous coated electrode active material.

### <Example 4>

An electrode material including a carbonaceous coated electrode active material was obtained in the same manner as in Example 1 except for the fact that LiMnPO₄ (19 g) was used instead of LiFePO₄, a mixed solution of Li carbonate, iron (II) acetate, and phosphoric acid (Li:Fe:P=1:1:1) corresponding to 41 g of LiFePO₄ was used as a carbonization catalyst, polyvinyl alcohol (PVA) (1.1 g) was used as the carbon source, and sodium polyacrylate (0.05 g) was used as the highly water-absorbing polymer.

### <Example 5>

An electrode material including a carbonaceous coated electrode active material was obtained in the same manner as in Example 1 except for the fact that Li [Fe_{0.25}Mn_{0.75}]PO₄ was used instead of LiFePO₄.

### <Example 6>

LiFePO₄ (20 g) obtained in Manufacturing Example 1 and glucose (0.8 g) were mixed into water so that a total amount reached 80 g and were crushed and mixed using a ball mill together with zirconia balls (150 g) having 5 mmφ, thereby obtaining a slurry (mixture).

Next, the obtained slurry was dried and granulated using a spray dryer. After that, the obtained granulated substance was heated in a nitrogen (N₂) atmosphere at a temperature-increase rate of 20°C/minute, and a thermal treatment was carried out at a temperature of 770°C for four hours, thereby obtaining an electrode material including a carbonaceous coated electrode active material.

### <Example 7>

A slurry was granulated in the same manner as in Example 6 except for the fact that the amount of glucose that served as the carbon source was set to 0.4 g, thereby producing a granulated substance. Next, PVA (0.4 g) was added thereto and stirred, then, the granulated substance was heated in a nitrogen (N₂) atmosphere at a temperature-increase rate of 20°C/minute, and a thermal treatment was carried out at a temperature of 770°C for four hours, thereby obtaining an electrode material including a carbonaceous coated electrode active material.

### <Example 8>

An electrode material including a carbonaceous coated electrode active material was obtained in the same manner as in Example 7 except for the fact that the amount of water mixed was increased, and the total amount was set to 150 g.

### <Example 9>

An electrode material including a carbonaceous coated electrode active material was obtained in the same manner as in Example 7 except for the fact that a thermal treatment temperature was set to 700°C.

### <Example 10>

An electrode material including a carbonaceous coated electrode active material was obtained in the same manner as in Example 6 except for the fact that the amount of glucose that served as the carbon source was set to 0.4 g and the amount of PVA was set to 0.4 g.

<Comparative Example 1>

An electrode material of Comparative Example 1 was obtained in the same manner as in Example 1 except for the fact that PVA (3 g) was used as the carbon source.

### <Production of lithium ion secondary battery>

The electrode material obtained in each of the examples and the comparative example, acetylene black (AB) as a conductive auxiliary agent, and polyvinylidene fluoride (PVdF) as a binding material were mixed into N-methyl-2-pyrrolidone (NMP) in a weight ratio (the electrode material:AB:PVdF) of 90:5:5, thereby producing a cathode material paste. The obtained paste was applied and dried on a 30 µm-thick aluminum foil and bonded by pressurization so as to obtain a predetermined density, thereby producing an electrode plate.

A plate-like specimen including a 3×3 cm² coated surface and a space for a tab was obtained from the obtained electrode plate by means of punching, and a tap was welded, thereby producing a test electrode.

Meanwhile, as a counter electrode, a coated electrode obtained by, similarly, applying Li₄Ti₅O₁₂ was used. As a separator, a porous polypropylene film was employed. In addition, a lithium hexafluorophosphate (LiPF₆) solution (1 mol/L) was used as a non-aqueous electrolyte (a solution of a non-aqueous electrolyte). Meanwhile, as a solvent that was used in the LiPF₆ solution, a solvent obtained by mixing ethylene carbonate and diethyl carbonate 1:1 in terms of percentage by volume and adding vinylene carbonate (2%) thereto as an additive was used.

In addition, laminate-type cells were produced using the test electrode, the counter electrode, and the non-aqueous electrolyte produced in the above-described manner and were used as lithium ion secondary batteries of the examples and the comparative example.

### [Evaluation of electrode materials]

For the electrode materials obtained in the examples and the comparative example and the components included in the electrode materials, properties were evaluated. Evaluation methods are as described below. Meanwhile, the results are shown in Table 1.
(1) Average particle diameter of secondary particles of carbonaceous coated electrode active material
   The average particle diameter of the secondary particles of the carbonaceous coated electrode active material was measured using a laser diffraction/scattering particle size distribution analyzer (manufactured by Horiba, Ltd., trade name: LA-950V2) by suspending the electrode material in a dispersion medium obtained by dissolving polyvinyl pyrrolidine (0.1%) in water.
(2) Average particle diameter of primary particles of electrode active material
   The average particle diameter of the primary particles of the electrode active material was obtained by number-averaging the particle diameters of 200 or more primary particles measured by scanning electron microscopic (SEM) observation.
(3) Content of carbon in carbonaceous coated electrode active material
   The content of carbon (% by mass) in the carbonaceous coated electrode active material was measured using a carbon analyzer (manufactured by Horiba Ltd., carbon/sulfur combustion analyzer EMIA-810W).
(4) Specific surface area of carbonaceous coated electrode active material
   The specific surface area of the carbonaceous coated electrode active material was measured using a BET method by means of nitrogen (N₂) adsorption and a specific surface area meter (manufactured by MicrotracBEL Corp., trade name: BELSORP-mini).
(5) The average primary particle diameter A of the carbonaceous coated electrode active material was calculated from Expression (1).
   Average primary particle diameter A (nm)=6/[(true specific gravity (g/m³) of carbonaceous coated electrode active material)×(BET specific surface area (m²/g) of carbonaceous coated electrode active material)×10⁹] (1)
   Meanwhile, the true specific gravity of the carbonaceous coated electrode active material is set to 3,600,000 g/m³.
(6) Crystallite diameter B of electrode active material
   The crystallite diameter B of the electrode active material was calculated from the Scherrer equation using a full width at half maximum of a diffraction peak of a (020) plane in a powder X-ray diffraction pattern that is measured and obtained using an X-ray diffractormeter (for example, RINT2000, manufactured by Rigaku Corporation) and a diffraction angle (2θ).
(7) Calculation of Ratio A/B
   A ratio A/B was calculated from the average primary particle diameter A calculated in (5) and the crystallite diameter B calculated in (6).
(8) NMP oil absorption amount
   The NMP oil absorption amount using N-methyl-2-pyrrolidone (NMP) was measured according to a method described in JIS K5101-13-1 (refined linseed oil method) using linseed oil instead of NMP.
(9) Green compact resistance of electrode material The electrode material was injected into a mold and molded at a pressure of 50 MPa, thereby producing a specimen. The powder resistivity (Ω·cm) of the specimen was measured using a low resistivity meter (manufactured by Mitsubishi Chemical Corporation, trade name: Loresta-GP) by four point measurements at 25°C.

### (Evaluation of electrodes and lithium ion secondary batteries)

Discharge capacities and direct current resistances (DCR) of charging and discharging were measured using the lithium ion secondary batteries obtained in the examples and the comparative example. The results are shown in Table 1.

### (1) Discharge capacity

The discharge capacities were measured at an ambient temperature of 0°C by means of constant-current charging and discharging with a charge current set to 1 C, a discharge current set to 3 C, and a cut-off voltage set to 1 to 2 V (vs Li₄Ti₅O₁₂) for the batteries of Examples 1, 2, 3, 6, 7, 8, 9, and 10 and Comparative Example 1 and to 1.2 to 3 V (vs Li₄Ti₅O₁₂) for the batteries of Examples 4 and 5.

### (2) Direct current resistance (DCR) of charging and discharging

The lithium ion secondary batteries were charged with a current of 0.1 C at an ambient temperature of 0°C for five hours, and the depths of charge were adjusted (state of charge (SOC) 50%). On the batteries adjusted to SOC 50%, "1C charging for 10 seconds → 10-minute rest → 1C discharging for 10 seconds → 10-minute rest" as a first cycle, "3C charging for 10 seconds → 10-minute rest -> 3C discharging for 10 seconds → 10-minute rest" as a second cycle, "5C charging for 10 seconds → 10-minute rest → 5C discharging for 10 seconds → 10-minute rest" as a third cycle, and "10C charging for 10 seconds → 10-minute rest → 10C discharging for 10 seconds → 10-minute rest" as a fourth cycle were sequentially carried out. Voltages 10 seconds after the respective charging and discharging during the cycles were measured. Individual current values were plotted along the horizontal axis, and the voltages after 10 seconds were plotted along the vertical axis, thereby drawing approximate straight lines. The slopes of the approximate straight lines were respectively considered as direct current resistances during charging (charging DCR) and direct current resistances during discharging (discharging DCR).

**[Table 1]**

| | Electrode active material | Average particle diameter of secondary particles of carbonaceous coated electrode active material (µm) | Average particl e diamete r of primary particl es of electro de active materia 1 (nm) | Content of carbon in carbonaceo us coated electrode active material (% by mass) | Specific surface area of carbonaceo us coated electrode active material (m²/g) | Averag e primar y partic le diamet er A (nm) | Crystalli te diameter B (nm) | Rati o A/B | NMP oil absorpti on amount (ml/100 g) | Green compact resistan ce of electrod e material (Ω·cm) | 3C dischar ge capacit y (mAh/g) | Charg ing DCR (Ω) | Dischargin g DCR (Ω) |
|---|---|---|---|---|---|---|---|---|---|---|---|---|---|
| Example 1 | LiFePO₄ | 6.0 | 95 | 1.0 | 12.1 | 137.7 | 58 | 2.37 | 45 | 130 | 124 | 2.2 | 2.1 |
| Example 2 | LiFePO₄ | 11.0 | 74 | 1.1 | 12.5 | 133.3 | 66 | 2.02 | 35 | 110 | 120 | 2.5 | 2.3 |
| Example 3 | LiFePO₄ | 57.0 | 71 | 1.0 | 12.1 | 137.7 | 60 | 2.30 | 30 | 120 | 122 | 2.3 | 2.2 |
| Example 4 | LiMnPO₄ | 1.0 | 92 | 1.5 | 16.3 | 102.2 | 52 | 1.97 | 49 | 770 | 105 | 2.9 | 2.6 |
| Example 5 | Li [Fe_{0.25}Mn_{0.75}]PO₄ | 8.0 | 101 | 1.0 | 14 | 119.0 | 54 | 2.20 | 46 | 160 | 112 | 2.5 | 2.4 |
| Example 6 | LiFePO₄ | 9.1 | 110 | 1.0 | 15.2 | 109.8 | 90 | 1.22 | 39 | 283 | 130 | 2.6 | 2.0 |
| Example 7 | LiFePO₄ | 6.7 | 110 | 1.0 | 15.3 | 109.1 | 105 | 1.04 | 43 | 250 | 126 | 2.6 | 2.1 |
| Example 8 | LiFePO₄ | 5.2 | 107 | 0.9 | 15.4 | 108.2 | 103 | 1.05 | 48 | 274 | 125 | 2.6 | 2.1 |
| Example 9 | LiFePO₄ | 7.6 | 95 | 1.1 | 15.3 | 109.2 | 90.6 | 1.20 | 42 | 357 | 129 | 2.9 | 2.4 |
| Example 10 | LiFePO₄ | 5.5 | 140 | 0.9 | 7.0 | 238.1 | 135 | 1.76 | 47 | 220 | 135 | 2.4 | 2.1 |
| Comparative Example 1 | LiFePO₄ | 15.0 | 108 | 3.4 | 19.2 | 86.8 | 96.0 | 0.90 | 40 | 371 | 113 | 10.8 | 7.6 |

### (Summary of results)

In all of Examples 1 to 10 in which an electrode material in which the ratio A/B of the average primary particle diameter A (nm) that is estimated from a specific surface area of the carbonaceous coated electrode active material obtained by the BET method to the crystallite diameter B (nm) of the electrode active material was 1 or more and 2.5 or less, the discharge capacities of the lithium ion secondary batteries increased, and a decrease in the direct current resistance could be confirmed. On the other hand, in the electrode material of Comparative Example 1 in which the ratio A/B did not satisfy the above-described range, it could be confirmed that the specific surface area was larger compared with the examples. In addition, in Comparative Example 1, the green compact resistance was great, and the direct current resistance also became great.

The electrode material for a lithium ion secondary battery of the present invention is useful as a cathode of a lithium ion secondary battery.

## Claims

1. An electrode material for a lithium ion secondary battery comprising:
a carbonaceous coated electrode active material having primary particles of an electrode active material, secondary particles that are aggregates of the primary particles, and a carbonaceous film that coats the primary particles of the electrode active material and the secondary particles that are the aggregates of the primary particles,
wherein a ratio A/B of an average primary particle diameter A (nm) that is estimated from a specific surface area of the carbonaceous coated electrode active material obtained by a BET method to a crystallite diameter B (nm) of the electrode active material is 1 or more and 2.5 or less,
wherein the average primary particle diameter A is 30 nm or more and 380 nm or less,
wherein the crystallite diameter B is 30 nm or more and 150 nm or less,
wherein an average particle diameter of the secondary particles of the carbonaceous coated electrode active material is 0.5 µm or more and 60 µm or less, wherein the specific surface area of the carbonaceous coated electrode active material obtained by the BET method is 6 m²/g or more and 25 m²/g or less,
and
wherein a content of carbon in the carbonaceous coated electrode active material is 0.5% by mass or more and 2.5% by mass or less, a coating ratio of the carbonaceous film is 80% or more, and a film thickness of the carbonaceous film is 0.8 nm or more and 5.0 nm or less,
wherein the parameters are determined by the methods defined in paragraphs [0067]-[0072] of the description.

2. The electrode material for a lithium ion secondary battery according to Claim 1, wherein the electrode active material is represented by General Formula LiₓA_{y}D_{z}PO₄ (here, A represents at least one element selected from the group consisting of Co, Mn, Ni, Fe, Cu, and Cr, D represents at least one element selected from the group consisting of Mg, Ca, Sr, Ba, Ti, Zn, B, Al, Ga, In, Si, Ge, Sc, and Y, 0.9<x<1.1, 0<y≤1.0, 0≤z<1.0, and 0.9<y+z<1.1).

3. The electrode material for a lithium ion secondary battery according to Claim 1 or 2,
wherein an oil absorption amount of the carbonaceous coated electrode active material using N-methyl-2-pyrrolidone (NMP) is 50 ml/100 g or less.

4. An electrode for a lithium ion secondary battery formed using the electrode material according to any one of Claims 1 to 3.

5. A lithium ion secondary battery using the electrode according to Claim 4.

## Patentansprüche

1. Elektrodenmaterial für eine Lithiumionensekundärbatterie, umfassend:
ein kohlenstoffhaltiges beschichtetes Elektrodenaktivmaterial mit Primärteilchen eines Elektrodenaktivmaterials, Sekundärteilchen, welche Aggregate der Primärteilchen sind, und einem kohlenstoffhaltigen Film, welcher die Primärteilchen des Elektrodenaktivmaterials und die Sekundärteilchen, welche die Aggregate der Primärteilchen sind, beschichtet,
wobei ein Verhältnis A/B eines gemittelten Primärteilchendurchmessers A (nm), welcher aus einer spezifischen Oberfläche des kohlenstoffhaltigen beschichteten Elektrodenaktivmaterials, erhalten durch ein BET-Verfahren, abgeschätzt wird, zu einem Kristallitdurchmesser B (nm) des Elektrodenaktivmaterials 1 oder mehr und 2,5 oder weniger beträgt,
wobei der gemittelte Primärteilchendurchmesser A 30 nm oder mehr und 380 nm oder weniger beträgt,
wobei der Kristallitdurchmesser B 30 nm oder mehr und 150 nm oder weniger beträgt,
wobei ein gemittelter Teilchendurchmesser der Sekundärteilchen des kohlenstoffhaltigen beschichteten Elektrodenaktivmaterials 0,5 µm oder mehr und 60 µm oder weniger beträgt,
wobei die spezifische Oberfläche des kohlenstoffhaltigen beschichteten Elektrodenaktivmaterials, erhalten durch das BET-Verfahren, 6 m²/g oder mehr und 25 m²/g oder weniger beträgt, und
wobei ein Kohlenstoffgehalt in dem kohlenstoffhaltigen beschichteten Elektrodenaktivmaterial 0,5 Massen-% oder mehr und 2,5 Massen-% oder weniger beträgt, ein Beschichtungsverhältnis des kohlenstoffhaltigen Films 80% oder mehr beträgt und eine Filmdicke des kohlenstoffhaltigen Films 0,8 nm oder mehr und 5,0 nm oder weniger beträgt,
wobei die Parameter durch die in Absätzen [0067]-[0072] der Beschreibung definierten Verfahren bestimmt werden.

2. Elektrodenmaterial für eine Lithiumionensekundärbatterie nach Anspruch 1, wobei das Elektrodenaktivmaterial durch die allgemeine Formel LiₓA_{y}D_{z}PO₄ dargestellt ist (hierin stellt A mindestens ein Element, ausgewählt aus der Gruppe, bestehend aus Co, Mn, Ni, Fe, Cu und Cr, dar, stellt D mindestens ein Element, ausgewählt aus der Gruppe, bestehend aus Mg, Ca, Sr, Ba, Ti, Zn, B, Al, Ga, In, Si, Ge, Sc und Y, dar, 0,9<x<1,1, 0<y≤1,0, 0≤z<1,0 und 0,9<y+z<1,1).

3. Elektrodenmaterial für eine Lithiumionensekundärbatterie nach Anspruch 1 oder 2,
wobei eine Ölabsorptionsmenge des kohlenstoffhaltigen beschichteten Elektrodenaktivmaterials unter Verwendung von N-Methyl-2-pyrrolidon (NMP) 50 ml/100 g oder weniger beträgt.

4. Elektrode für eine Lithiumionensekundärbatterie, gebildet unter Verwendung des Elektrodenmaterials nach einem der Ansprüche 1 bis 3.

5. Lithiumionensekundärbatterie, welche die Elektrode nach Anspruch 4 verwendet.

## Revendications

1. Matériau d'électrode pour une batterie secondaire lithium-ion, comprenant :
un matériau d'électrode actif à revêtement carboné, ayant des particules primaires d'un matériau d'électrode actif, des particules secondaires qui sont agrégées aux particules primaires, et un film carboné qui enduit les particules primaires du matériau d'électrode actif et les particules secondaires qui sont agrégées aux particules primaires,
dans lequel le rapport A/B du diamètre moyen des particules primaires A (nm), qui est estimé à partir de la surface spécifique du matériau d'électrode actif à revêtement carboné obtenue par le procédé BET, au diamètre de cristallite B (nm) du matériau d'électrode actif se situe à 1 ou plus et à 2,5 ou moins,
dans lequel le diamètre moyen des particules primaires A se situe à 30 nm ou plus et à 380 nm ou moins,
dans lequel le diamètre de cristallite B se situe à 30 nm ou plus et à 150 nm ou moins,
dans lequel le diamètre particulaire moyen des particules secondaires du matériau d'électrode actif à revêtement carboné se situe à 0,5 µm ou plus et à 60 µm ou moins, dans lequel la surface spécifique du matériau d'électrode actif à revêtement carboné obtenue par le procédé BET se situe à 6 m²/g ou plus et à 25 m²/g ou moins, et
dans lequel la teneur en carbone dans le matériau d'électrode actif à revêtement carboné se situe à 0,5% en masse ou plus et à 2,5% en masse ou moins, le rapport de revêtement du film carboné se situe à 80% ou plus et l'épaisseur du film carboné se situe à 0,8 nm ou plus et à 5,0 nm ou moins,
dans lequel les paramètres sont déterminés par les procédés définis aux paragraphes [0067]-[0072] de la description.

2. Matériau d'électrode pour une batterie secondaire lithium-ion selon la revendication 1, dans lequel le matériau d'électrode actif est représenté par la formule générale LiₓA_{y}D_{z}PO₄ (où A représente au moins un élément choisi parmi le groupe consistant en Co, Mn, Ni, Fe, Cu et Cr, D représente au moins un élément choisi parmi le groupe consistant en Mg, Ca, Sr, Ba, Ti, Zn, B, Al, Ga, In, Si, Ge, Sc et Y, 0,9 < x < 1,1, 0 < y ≤ 1,0, 0 ≤ z < 1,0 et 0,9 < y+z < 1,1).

3. Matériau d'électrode pour une batterie secondaire lithium-ion selon la revendication 1 ou 2, dans lequel la quantité d'absorption d'huile du matériau d'électrode actif à revêtement carboné, déterminée à l'aide de la N-méthyl-2-pyrrolidone (NMP) se situe à 50 ml/100 g ou moins.

4. Électrode pour batterie secondaire à lithium-ion formée à l'aide du matériau d'électrode selon l'une quelconque des revendications 1 à 3.

5. Batterie secondaire à lithium-ion utilisant l'électrode selon la revendication 4.
